# EUROPEAN PATENT APPLICATION

(11) **EP 2 728 763 A1**
(43) Date of publication of application: **07.05.2014**
(21) Application number: 13190365.0
(22) Date of filing: 25.10.2013
(51) Int. Cl.: H04B 1/52

(54) **Cognitive radio RF front end**

(30) Priority: 01.11.2012 US 201213666313
(71) Applicant: BlackBerry Limited, Waterloo, ON N2K 0A7 (CA)
(72) Inventor: Steer, David, Ontario, Canada, K2H 8Z8 (CA); Yu, Dongsheng, Ontario, Canada, K2K 3K1 (CA)
(74) Representative: Noble, Nicholas

(57) **Abstract**

Embodiments are directed to a circuit comprising separately tunable receive and transmit frequency bands, wherein the circuit is configured to minimize undesired transmitter signals in a receiver path by dynamically adjusting an input to a receiver low noise amplifier by using a transmit baseband conversion signal and a transmit output signal from a transmit power amplifier as feedback to the receiver low noise amplifier.

## Description

### BACKGROUND

Typically, transceivers in devices (e.g., mobile handsets or client nodes) include separate, broadband radio frequency (RF) front ends for each radio band that is to be utilized. These RF front ends connect to common radio access technology processing chips. As the number of bands and technologies increases, it becomes increasingly difficult to include the needed antennas and front ends in the ever shrinking size of the devices.

Furthermore, many of the new bands, and some existing bands, are being extended to become wider. As a result, devices need to operate over a wider bandwidth than previously. In other cases, the new band may be shared with other services and may contain foreign interfering signals in adjacent channels. Operating over ever-widening bandwidths also creates problems of signals from one part of the band affecting another. The broadband receiver, for example, may be desensitized by strong signals in another part of the band. In further cases, suitable components may not be available to work with the wideband channel.

As new spectrum is allocated to handle increasing traffic, some of the existing bands are being extended and new bands are being added. When the bands are extended or new bands are added, often the bandwidth increases. A wider bandwidth may affect the percent bandwidth of the filters used in the RF circuits. The percent-bandwidth is an expression of the bandwidth of the band divided by the center frequency of the band. Thus for example, if a radio with a 50 MHz bandwidth initially designed for the 2100 MHz band is to be operated in the 700 MHz band, the percent-bandwidth increases from (50/2100 =) 2.4% to (50/700 =) 7.1%. A higher percent-bandwidth filter is more difficult to produce and may have increased loss compared with a filter with a lower percent-bandwidth. Such increased loss causes both reduced sensitivity of the receiver and extra battery consumption to overcome losses for the transmitter.

As radio formats or waveforms are adapted to operate in various bands, with comparable bandwidths in each, the percent bandwidth changes and this makes the design of radio components difficult if not impossible. Furthermore, a wide band front end is undesirable as it increases the noise in the receiver which limits the communications range.

In some instances, such as when multi-capability radios are used to operate in connection with a shared spectrum, there is a need to be compatible with other radio signals and services that are also operating in the same band or adjacent channels. Such "cognitive radios" may share the use of a band with other systems using different radio technology. Thus there may be other signals in the band, including in adjacent channels, which the mobile's transceiver system must reject or protect.

### BRIEF DESCRIPTION OF THE DRAWINGS

The present disclosure may be understood, and its numerous objects, features and advantages obtained, when the following detailed description is considered in conjunction with the following drawings, in which:

Figure 1 depicts an exemplary system in which the present disclosure may be implemented;

Figure 2 shows a wireless-enabled communications environment including an embodiment of a client node;

Figure 3 is a simplified block diagram of an exemplary client node comprising a digital signal processor (DSP);

Figure 4 is block diagram of an exemplary transceiver and front end in accordance with one or more embodiments;

Figure 5 is a block diagram of an exemplary antenna tuning and matching circuit in accordance with one or more embodiments;

Figure 6 is a block diagram of an exemplary duplexer in accordance with one or more embodiments;

Figure 7A is an block diagram of an exemplary tunable amplifier in accordance with one or more embodiments;

Figure 7B is an block diagram of an exemplary tunable amplifier in accordance with one or more embodiments;

Figure 8 is a block diagram of an exemplary coupling apparatus in accordance with one or more embodiments;

Figure 9 is a block diagram of an exemplary architecture in accordance with one or more embodiments;

Figure 10 is a flow chart of an exemplary method in accordance with one or more embodiments; and

Figure 11 is a flow chart of an exemplary method in accordance with one or more embodiments.

### DETAILED DESCRIPTION

The present disclosure is directed in general to communications systems and methods for operating the same. In some embodiments, a cognitive RF front end may be used. The front end may be associated with a transceiver. The front end may include one or more tunable elements (e.g., components or devices). A tunable element may be tuned to obtain a desired operating result or characteristic.

An embodiment is directed to a method of operating a transceiver comprising: coupling an attenuated version of a transmitter signal to a receiver amplifier to subtract interference generated by the transmitter signal from a received signal, selecting parameters from a storage apparatus, and applying the parameters to elements of the transceiver to tune said elements in order to operate a channel associated with the transmitter signal and the received signal.

An embodiment is directed to a device comprising: a circuit comprising separately tunable receive and transmit frequency bands, wherein the circuit is configured to minimize undesired transmitter signals in a receiver path by dynamically adjusting an input to a receiver low noise amplifier by using a transmit baseband conversion signal and a transmit output signal from a transmit power amplifier as feedback to the receiver low noise amplifier.

An embodiment is directed to a device comprising: an antenna tuning and matching circuit configured to be matched to an impedance of an antenna based on one or more parameters, a duplexer coupled to the antenna tuning and matching circuit, wherein the duplexer is configured to prevent a transmitter signal from swamping a receiver signal based on the one or more parameters, a first amplifier coupled to the duplexer, wherein the first amplifier is configured to amplify the transmitter signal, a first filter device coupled to the first amplifier, wherein the first filter device is configured to filter the transmitter signal based on the one or more parameters, a coupling apparatus coupled to the first amplifier, wherein the coupling apparatus is configured to generate an attenuated and delayed version of the transmitter signal based on the one or more parameters, a second filter device coupled to the duplexer, wherein the second filter device is configured to filter the receiver signal based on the one or more parameters, a second amplifier coupled to the second filter device and the coupling apparatus, wherein the second amplifier is configured to amplify a difference between the receiver signal and the attenuated and delayed version of the transmitter signal, a storage apparatus configured to store the one or more parameters, and a controller comprising a processing device, wherein the controller is configured to control access to the one or more parameters via the storage apparatus which facilitates dynamically tuning one or more elements of the device.

In some embodiments, an output of a first amplifier (e.g., a power amplifier (PA)) may be coupled to an input of a second amplifier (e.g., a low noise amplifier (LNA)). The first amplifier may be associated with a transmitter and the second amplifier may be associated with a receiver. In some embodiments, the coupling may correspond to either a direct connection or an indirect connection (e.g., via one or more intervening devices or components). For example, in some embodiments a device or component may be configured to attenuate and/or delay the output of the first amplifier, and the attenuated and/or delayed version of the output of the first amplifier may be provided as an input to the second amplifier.

In some embodiments, operation may take place in a Time Division Duplex (TDD) or Frequency Division Duplex (FDD) mode, or with varying duplex separation such as the USA and APT "700 MHz" bands. The various "700 MHz" bands may correspond to 3GPP E-UTRA operating band numbers 12, 13, 14, 17, 28, and 44. In some embodiments, one or more bands may be operated in TDD mode in one region and FDD mode in another.

In some embodiments, an RF front end may be operated in TDD and/or FDD modes dynamically. For example, in 3GPP Rel-11/12 and onwards, for carrier aggregation, there may be two aggregated carriers which are both TDD but have different uplink/downlink (UL/DL) configurations. This may lead to adding a duplexer even in TDD mode. For small cell (e.g., within macro-cell coverage) scenarios, TDD may be used in a small cell at a higher frequency and FDD may be used for macro-cells. A macro-cell may provide most control signaling and small cell may be used for purposes of data offloading, so a device (e.g., a handset or client node) may be configured to support both TDD and FDD simultaneously at different bands.

In some embodiments, an RF front end may be applied to devices that must transmit and receive in multiple bands simultaneously, for example, for carrier aggregation. The RF bandwidth may be dynamically limited to that needed to support the operating communications channel, and thus, may minimize noise in the receiver and extraneous emissions from the transmitter. The RF front end configuration may provide better performance than conventional configurations and may be able to operate in connection with a fragmented spectrum that is inaccessible to previous (conventional) wide-band radio front end designs.

In some embodiments, an RF front end is provided that is flexible and can be utilized in multiple applications where the percent-bandwidth is large and there is a need to accommodate wide bands and multiple bands on a common apparatus. In some embodiments, narrow-band arrangements of matching networks, RF filters and duplexers may be dynamically adapted for service over a wide range of RF bands, channel plans and shared spectrum. In some embodiments, an RF front end may be suitable for use with shared blocks of spectrum in which there may be other users/services in the band that must be rejected. In some embodiments, filtering may be adapted to local conditions by a device, such as a mobile device or client node.

In some embodiments, adaptive, narrow-band tuned elements in the front end may be dynamically adjusted to only be as wide as needed to accommodate the signal(s) being received/transmitted and can be arranged to suppress the undesired signals that may otherwise be in-band. This arrangement may enable antennas to be adapted to suit wide frequency ranges without the need to utilize multiple antennas to attain desired bandwidths for wide band assignments. Cancelling of the transmitted signal in the receiver section may enable tighter separation between transmit and receive signals as well as improved suppression of non-linear effects from multiple transmitters. In some embodiments, operation with small duplex gaps may be provided without introducing excess filter loss or multiple duplexers.

Various illustrative embodiments of the present disclosure will now be described in detail with reference to the accompanying figures. While various details are set forth in the following description, it will be appreciated that the present disclosure may be practiced without these specific details, and that numerous implementation-specific decisions may be made to the disclosure described herein to achieve specific goals, such as compliance with process technology or design-related constraints, which will vary from one implementation to another. While such a development effort might be complex and time-consuming, it would nevertheless be a routine undertaking for those of skill in the art having the benefit of this disclosure. For example, selected aspects are shown in block diagram and flowchart form, rather than in detail, in order to avoid limiting or obscuring the present disclosure. In addition, some portions of the detailed descriptions provided herein are presented in terms of algorithms or operations on data within a computer memory. Such descriptions and representations are used by those skilled in the art to describe and convey the substance of their work to others skilled in the art.

As used herein, the terms "component," "system" and the like are intended to refer to a computer-related entity, either hardware, software, a combination of hardware and software, or software in execution. For example, a component may be, but is not limited to being, a processor, a process running on a processor, an object, an executable instruction sequence, a thread of execution, a program, or a computer. By way of illustration, both an application running on a computer and the computer itself can be a component. One or more components may reside within a process or thread of execution and a component may be localized on one computer or distributed between two or more computers.

As likewise used herein, the term "node" broadly refers to a connection point, such as a redistribution point or a communication endpoint, of a communication environment, such as a network. Accordingly, such nodes refer to an active electronic device capable of sending, receiving, or forwarding information over a communications channel. Examples of such nodes include data circuit-terminating equipment (DCE), such as a modem, hub, bridge or switch, and data terminal equipment (DTE), such as a handset, a printer or a host computer (e.g., a router, workstation or server). Examples of local area network (LAN) or wide area network (WAN) nodes include computers, packet switches, cable modems, Data Subscriber Line (DSL) modems, and wireless LAN (WLAN) access points. Examples of Internet or Intranet nodes include host computers identified by an Internet Protocol (IP) address, bridges and WLAN access points. Likewise, examples of nodes in cellular communication include base stations, relays, base station controllers, radio network controllers, home location registers (HLR), visited location registers (VLR), Gateway GPRS Support Nodes (GGSN), Serving GPRS Support Nodes (SGSN), Serving Gateways (S-GW), and Packet Data Network Gateways (PDN-GW).

Other examples of nodes include client nodes, server nodes, peer nodes and access nodes. As used herein, a client node may refer to wireless devices such as mobile telephones, smart phones, personal digital assistants (PDAs), handheld devices, portable computers, tablet computers, and similar devices or other user equipment (UE) that has telecommunications capabilities. Such client nodes may likewise refer to a mobile, wireless device, or alternatively, to devices that have similar capabilities that are not generally transportable, such as desktop computers, set-top boxes, or sensors. A network node, as used herein, generally includes all nodes with the exception of client nodes, server nodes and access nodes. Likewise, a server node, as used herein, refers to an information processing device (e.g., a host computer), or series of information processing devices, that perform information processing requests submitted by other nodes. As likewise used herein, a peer node may sometimes serve as client node, and at other times, a server node. In a peer-to-peer or overlay network, a node that actively routes data for other networked devices as well as itself may be referred to as a supernode.

An access node, as used herein, refers to a node that provides a client node access to a communication environment. Examples of access nodes include cellular network base stations and wireless broadband (e.g., WiFi, WiMAX, etc.) access points, which provide corresponding cell and WLAN coverage areas. As used herein, a macrocell is used to generally describe a traditional cellular network cell coverage area. Such macrocells are typically found in rural areas, along highways, or in less populated areas. As likewise used herein, a microcell refers to a cellular network cell with a smaller coverage area than that of a macrocell. Such micro cells are typically used in a densely populated urban area. Likewise, as used herein, a picocell refers to a cellular network coverage area that is less than that of a microcell. An example of the coverage area of a picocell may be a large office, a shopping mall, or a train station. A femtocell, as used herein, currently refers to the smallest commonly accepted area of cellular network coverage. As an example, the coverage area of a femtocell is sufficient for homes or small offices.

In general, a coverage area radius of less than two kilometers typically corresponds to a microcell, 200 meters or less for a picocell, and on the order of 10 meters for a femtocell. The actual dimensions of the cell may depend on the radio frequency of operation, the radio propagation conditions and the density of communications traffic. As likewise used herein, a client node communicating with an access node associated with a macrocell is referred to as a "macrocell client." Likewise, a client node communicating with an access node associated with a microcell, picocell, or femtocell is respectively referred to as a "microcell client," "picocell client," or "femtocell client."

The term "article of manufacture" (or alternatively, "computer program product") as used herein is intended to encompass a computer program accessible from any computer-readable device or media. For example, computer readable media can include but are not limited to magnetic storage devices (e.g., hard disk, floppy disk, magnetic strips, etc.), optical disks such as a compact disk (CD) or digital versatile disk (DVD), smart cards, and flash memory devices (e.g., card, stick, etc.).

The word "exemplary" is used herein to mean serving as an example, instance, or illustration. Any aspect or design described herein as "exemplary" is not necessarily to be construed as preferred or advantageous over other aspects or designs. Those of skill in the art will recognize many modifications may be made to this configuration without departing from the scope, spirit or intent of the claimed subject matter. Furthermore, the disclosed subject matter may be implemented as a system, method, apparatus, or article of manufacture using standard programming and engineering techniques to produce software, firmware, hardware, or any combination thereof to control a computer or processor-based device to implement aspects detailed herein.

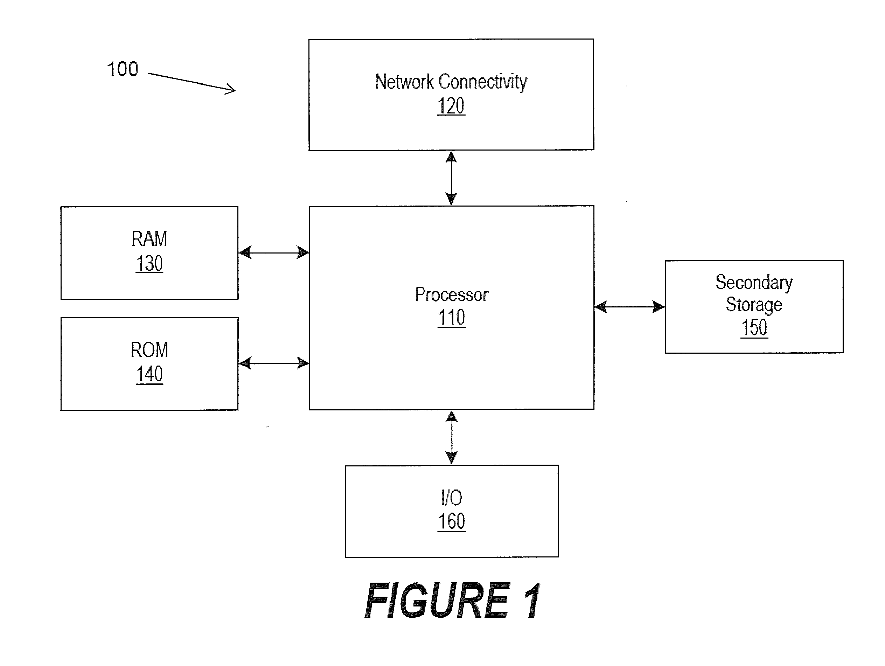

Figure 1 illustrates an example of a system 100 suitable for implementing one or more embodiments disclosed herein. In various embodiments, the system 100 comprises a processor 110, which may be referred to as a central processor unit (CPU) or digital signal processor (DSP), network connectivity interfaces 120, random access memory (RAM) 130, read only memory (ROM) 140, secondary storage 150, and input/output (I/O) devices 160. In some embodiments, some of these components may not be present or may be combined in various combinations with one another or with other components not shown. These components may be located in a single physical entity or in more than one physical entity. Any actions described herein as being taken by the processor 110 might be taken by the processor 110 alone or by the processor 110 in conjunction with one or more components shown or not shown in Figure 1.

The processor 110 executes instructions, codes, computer programs, or scripts that it might access from the network connectivity interfaces 120, RAM 130, or ROM 140. While only one processor 110 is shown, multiple processors may be present. Thus, while instructions may be discussed as being executed by a processor 110, the instructions may be executed simultaneously, serially, or otherwise by one or multiple processors 110 implemented as one or more CPU chips.

In various embodiments, the network connectivity interfaces 120 may take the form of modems, modem banks, Ethernet devices, universal serial bus (USB) interface devices, serial interfaces, token ring devices, fiber distributed data interface (FDDI) devices, wireless local area network (WLAN) devices (including radio, optical or infra-red signals), radio transceiver devices such as code division multiple access (CDMA) devices, global system for mobile communications (GSM) radio transceiver devices, long term evolution (LTE) radio transceiver devices, worldwide interoperability for microwave access (WiMAX) devices, and/or other well-known interfaces for connecting to networks, including Personal Area Networks (PANs) such as Bluetooth and near-field communications (NFC). These network connectivity interfaces 120 may enable the processor 110 to communicate with the Internet or one or more telecommunications networks or other networks from which the processor 110 might receive information or to which the processor 110 might output information.

The network connectivity interfaces 120 may also be capable of transmitting or receiving data wirelessly in the form of electromagnetic waves, such as radio frequency signals or microwave frequency signals. Information transmitted or received by the network connectivity interfaces 120 may include data that has been processed by the processor 110 or instructions that are to be executed by processor 110. The data may be ordered according to different sequences as may be desirable for either processing or generating the data or transmitting or receiving the data.

In various embodiments, the RAM 130 may be used to store volatile data and instructions that are executed by the processor 110. The ROM 140 shown in Figure 1 may likewise be used to store instructions and data that are read during execution of the instructions. The secondary storage 150 is typically comprised of one or more disk drives, solid state drives, or tape drives and may be used for nonvolatile storage of data or as an overflow data storage device if RAM 130 is not large enough to hold all working data. Secondary storage 150 may likewise be used to store programs that are loaded into RAM 130 when such programs are selected for execution. The I/O devices 160 may include liquid crystal displays (LCDs), Light Emitting Diode (LED) displays, Organic Light Emitting Diode (OLED) displays, projectors, televisions, touch screen displays, keyboards, keypads, switches, dials, mice, track balls, track pads, voice recognizers, card readers, paper tape readers, printers, video monitors, or other well-known input/output devices.

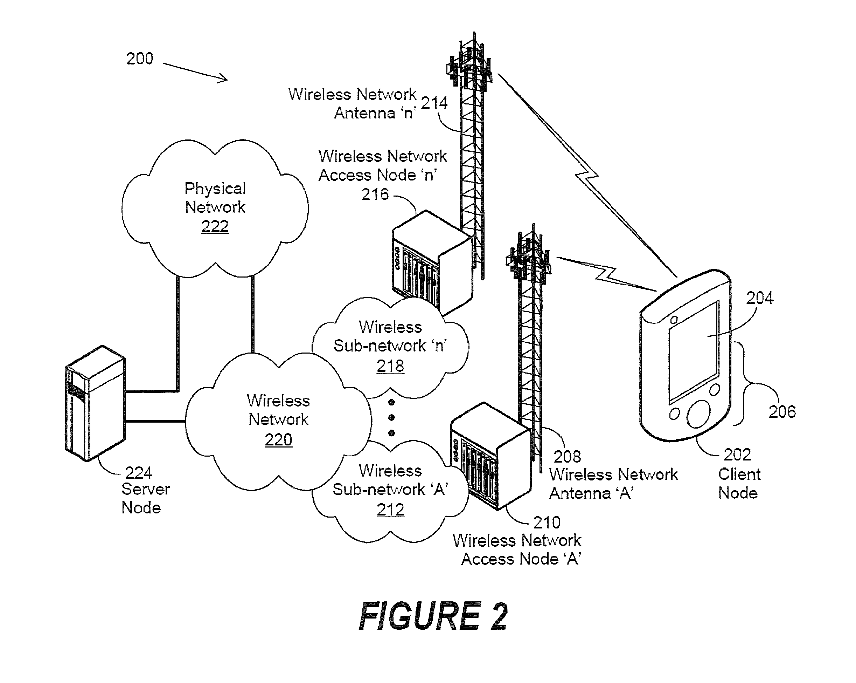

Figure 2 shows a wireless-enabled communications environment including an embodiment of a client node as implemented in an embodiment of the disclosure. Though illustrated as a mobile phone, the client node 202 may take various forms including a wireless handset, a pager, a smart phone, or a personal digital assistant (PDA). In various embodiments, the client node 202 may also comprise a portable computer, a tablet computer, a laptop computer, or any computing device operable to perform data communication operations. Many suitable devices combine some or all of these functions. In some embodiments, the client node 202 is not a general purpose computing device like a portable, laptop, or tablet computer, but rather is a special-purpose communications device such as a telecommunications device installed in a vehicle. The client node 202 may likewise be a device, include a device, or be included in a device that has similar capabilities but that is not transportable, such as a desktop computer, a set-top box, or a network node. In these and other embodiments, the client node 202 may support specialized activities such as gaming, inventory control, job control, task management functions, and so forth.

In various embodiments, the client node 202 includes a display 204. In these and other embodiments, the client node 202 may likewise include a touch-sensitive surface, a keyboard or other input keys 206 generally used for input by a user. The input keys 206 may likewise be a full or reduced alphanumeric keyboard such as QWERTY, DVORAK, AZERTY, and sequential keyboard types, or a traditional numeric keypad with alphabet letters associated with a telephone keypad. The input keys 206 may likewise include a trackwheel, an exit or escape key, a trackball, and other navigational or functional keys, which may be moved to different positions, e.g., inwardly depressed, to provide further input function. The client node 202 may likewise present options for the user to select, controls for the user to actuate, and cursors or other indicators for the user to direct.

The client node 202 may further accept data entry from the user, including numbers to dial or various parameter values for configuring the operation of the client node 202. The client node 202 may further execute one or more software or firmware applications in response to user commands. These applications may configure the client node 202 to perform various customized functions in response to user interaction. Additionally, the client node 202 may be programmed or configured over-the-air (OTA), for example from a wireless network access node 'A' 210 through 'n' 216 (e.g., a base station), a server node 224 (e.g., a host computer), or a peer client node 202.

Among the various applications executable by the client node 202 are a web browser, which enables the display 204 to display a web page. The web page may be obtained from a server node 224 through a wireless connection with a wireless network 220. As used herein, a wireless network 220 broadly refers to any network using at least one wireless connection between two of its nodes. The various applications may likewise be obtained from a peer client node 202 or other system over a connection to the wireless network 220 or any other wirelessly-enabled communication network or system.

In various embodiments, the wireless network 220 comprises a plurality of wireless sub-networks (e.g., cells with corresponding coverage areas) 'A' 212 through 'n' 218. As used herein, the wireless sub-networks 'A' 212 through 'n' 218 may variously comprise a mobile wireless access network or a fixed wireless access network. In these and other embodiments, the client node 202 transmits and receives communication signals, which are respectively communicated to and from the wireless network nodes 'A' 210 through 'n' 216 by wireless network antennas 'A' 208 through 'n' 214 (e.g., cell towers). In turn, the communication signals are used by the wireless network access nodes 'A' 210 through 'n' 216 to establish a wireless communication session with the client node 202. As used herein, the network access nodes 'A' 210 through 'n' 216 broadly refer to any access node of a wireless network. As shown in Figure 2, the wireless network access nodes 'A' 210 through 'n' 216 are respectively coupled to wireless sub-networks 'A' 212 through 'n' 218, which are in turn connected to the wireless network 220.

In various embodiments, the wireless network 220 is coupled to a core network 222, e.g., a global computer network such as the Internet. Via the wireless network 220 and the core network 222, the client node 202 has access to information on various hosts, such as the server node 224. In these and other embodiments, the server node 224 may provide content that may be shown on the display 204 or used by the client node processor 110 for its operations. Alternatively, the client node 202 may access the wireless network 220 through a peer client node 202 acting as an intermediary, in a relay type or hop type of connection. As another alternative, the client node 202 may be tethered and obtain its data from a linked device that is connected to the wireless sub-network 212. Skilled practitioners of the art will recognize that many such embodiments are possible and the foregoing is not intended to limit the spirit, scope, or intention of the disclosure.

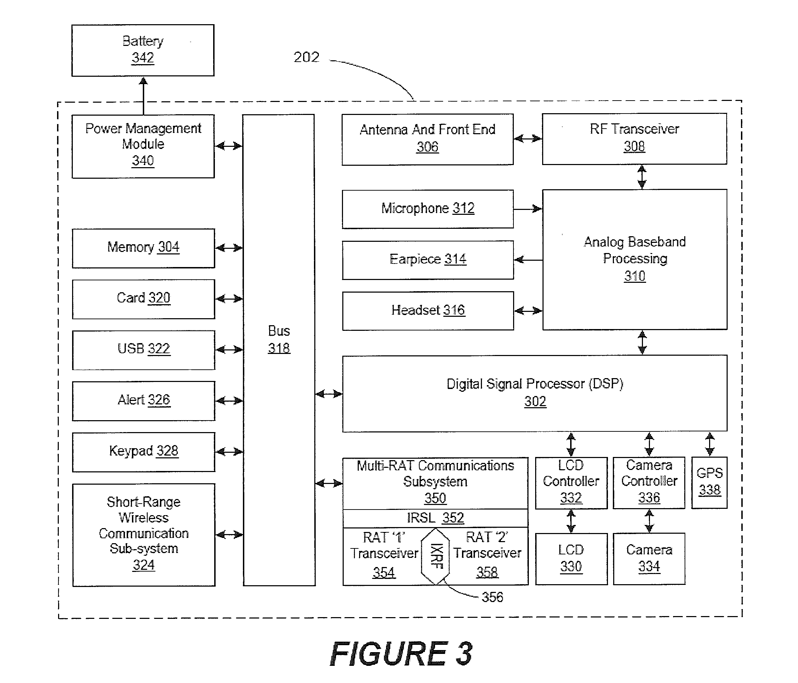

Figure 3 depicts a block diagram of an exemplary client node as implemented with a digital signal processor (DSP) in accordance with an embodiment of the disclosure. While various components of a client node 202 are depicted, various embodiments of the client node 202 may include a subset of the listed components or additional components not listed. As shown in Figure 3, the client node 202 includes a DSP 302 and a memory 304. As shown, the client node 202 may further include an antenna and front end unit 306, a radio frequency (RF) transceiver 308, an analog baseband processing unit 310, a microphone 312, an earpiece speaker 314, a headset port 316, a bus 318, such as a system bus or an input/output (I/O) interface bus, a removable memory card 320, a universal serial bus (USB) port 322, a short range wireless communication sub-system 324, an alert 326, a keypad 328, a liquid crystal display (LCD) 330, which may include a touch sensitive surface, an LCD controller 332, a charge-coupled device (CCD) camera 334, a camera controller 336, and a global positioning system (GPS) sensor 338, and a power management module 340 operably coupled to a power storage unit, such as a battery 342. In various embodiments, the client node 202 may include another kind of display that does not provide a touch sensitive screen. In one embodiment, the DSP 302 communicates directly with the memory 304 without passing through the input/output interface ("Bus") 318.

In various embodiments, the DSP 302 or some other form of controller or central processing unit (CPU) operates to control the various components of the client node 202 in accordance with embedded software or firmware stored in memory 304 or stored in memory contained within the DSP 302 itself. In addition to the embedded software or firmware, the DSP 302 may execute other applications stored in the memory 304 or made available via information media such as portable data storage media like the removable memory card 320 or via wired or wireless network communications. The application software may comprise a compiled set of machine-readable instructions that configure the DSP 302 to provide the desired functionality, or the application software may be high-level software instructions to be processed by an interpreter or compiler to indirectly configure the DSP 302.

The antenna and front end unit 306 may be provided to convert between wireless signals and electrical signals, enabling the client node 202 to send and receive information from a cellular network or some other available wireless communications network or from a peer client node 202. In an embodiment, the antenna and front end unit 106 may include multiple antennas to support beam forming and/or multiple input multiple output (MIMO) operations. As is known to those skilled in the art, MIMO operations may provide spatial diversity, which can be used to overcome difficult channel conditions or to increase channel throughput. The antenna and front-end unit 306 may include antenna tuning or impedance matching components, RF power amplifiers, low noise amplifiers, RF filters, or duplexers.

In various embodiments, the RF transceiver 308 provides frequency shifting, converting received RF signals to baseband and converting baseband transmit signals to RF. In some descriptions a radio transceiver or RF transceiver may be understood to include other signal processing functionality such as modulation/demodulation, coding/decoding, interleaving/deinterleaving, spreading/despreading, inverse fast Fourier transforming (IFFT)/fast Fourier transforming (FFT), cyclic prefix appending/removal, and other signal processing functions. For the purposes of clarity, the description here separates the description of this signal processing from the RF and/or radio stage and conceptually allocates that signal processing to the analog baseband processing unit 310 or the DSP 302 or other central processing unit. In some embodiments, the RF Transceiver 108, portions of the Antenna and Front End 306, and the analog base band processing unit 310 may be combined in one or more processing units and/or application specific integrated circuits (ASICs).

Note that in this diagram the radio access technology (RAT) RAT1 and RAT2 transceivers 354, 358, the IXRF 356, the IRSL 352 and Multi-RAT subsystem 350 are operably coupled to the RF transceiver 308 and analog baseband processing unit 310 and then also coupled to the antenna and front end 306 via the RF transceiver 308. As there may be multiple RAT transceivers, there will typically be multiple antennas or front ends 306 or RF transceivers 308, one for each RAT or band of operation.

The analog baseband processing unit 310 may provide various analog processing of inputs and outputs for the RF transceivers 308 and the speech interfaces (312, 314, 316). For example, the analog baseband processing unit 310 receives inputs from the microphone 312 and the headset 316 and provides outputs to the earpiece 314 and the headset 316. To that end, the analog baseband processing unit 310 may have ports for connecting to the built-in microphone 312 and the earpiece speaker 314 that enable the client node 202 to be used as a cell phone. The analog baseband processing unit 310 may further include a port for connecting to a headset or other hands-free microphone and speaker configuration. The analog baseband processing unit 310 may provide digital-to-analog conversion in one signal direction and analog-to-digital conversion in the opposing signal direction. In various embodiments, at least some of the functionality of the analog baseband processing unit 310 may be provided by digital processing components, for example by the DSP 302 or by other central processing units.

The DSP 302 may perform modulation/demodulation, coding/decoding, interleaving/deinterleaving, spreading/despreading, inverse fast Fourier transforming (IFFT)/fast Fourier transforming (FFT), cyclic prefix appending/removal, and other signal processing functions associated with wireless communications. In an embodiment, for example in a code division multiple access (CDMA) technology application, for a transmitter function the DSP 302 may perform modulation, coding, interleaving, and spreading, and for a receiver function the DSP 302 may perform despreading, deinterleaving, decoding, and demodulation. In another embodiment, for example in an orthogonal frequency division multiplex access (OFDMA) technology application, for the transmitter function the DSP 302 may perform modulation, coding, interleaving, inverse fast Fourier transforming, and cyclic prefix appending, and for a receiver function the DSP 302 may perform cyclic prefix removal, fast Fourier transforming, deinterleaving, decoding, and demodulation. In other wireless technology applications, yet other signal processing functions and combinations of signal processing functions may be performed by the DSP 302.

The DSP 302 may communicate with a wireless network via the analog baseband processing unit 310. In some embodiments, the communication may provide Internet connectivity, enabling a user to gain access to content on the Internet and to send and receive e-mail or text messages. The input/output interface 318 interconnects the DSP 302 and various memories and interfaces. The memory 304 and the removable memory card 320 may provide software and data to configure the operation of the DSP 302. Among the interfaces may be the USB interface 322 and the short range wireless communication sub-system 324. The USB interface 322 may be used to charge the client node 202 and may also enable the client node 202 to function as a peripheral device to exchange information with a personal computer or other computer system. The short range wireless communication sub-system 324 may include an infrared port, a Bluetooth interface, an IEEE 802.11 compliant wireless interface, or any other short range wireless communication sub-system, which may enable the client node 202 to communicate wirelessly with other nearby client nodes and access nodes. The short-range wireless communication Sub-system 324 may also include suitable RF Transceiver, Antenna and Front End subsystems.

The input/output interface ("Bus") 318 may further connect the DSP 302 to the alert 326 that, when triggered, causes the client node 202 to provide a notice to the user, for example, by ringing, playing a melody, or vibrating. The alert 326 may serve as a mechanism for alerting the user to any of various events such as an incoming call, a new text message, and an appointment reminder by silently vibrating, or by playing a specific pre-assigned melody for a particular caller.

The keypad 328 couples to the DSP 302 via the I/O interface ("Bus") 318 to provide one mechanism for the user to make selections, enter information, and otherwise provide input to the client node 202. The keyboard 328 may be a full or reduced alphanumeric keyboard such as QWERTY, DVORAK, AZERTY and sequential types, or a traditional numeric keypad with alphabet letters associated with a telephone keypad. The input keys may likewise include a trackwheel, track pad, an exit or escape key, a trackball, and other navigational or functional keys, which may be inwardly depressed to provide further input function. Another input mechanism may be the LCD 330, which may include touch screen capability, a keyboard display and also display text and/or graphics to the user. The LCD controller 332 couples the DSP 302 to the LCD 330.

The CCD camera 334, if equipped, enables the client node 202 to make digital pictures. The DSP 302 communicates with the CCD camera 334 via the camera controller 336. In another embodiment, a camera operating according to a technology other than Charge Coupled Device cameras may be employed. The GPS sensor 338 is coupled to the DSP 302 to decode global positioning system signals or other navigational signals, thereby enabling the client node 202 to determine its position. The GPS sensor 338 may be coupled to an antenna and front end (not shown) suitable for its band of operation. Various other peripherals may also be included to provide additional functions, such as radio and television reception.

In various embodiments, the client node (e.g., 202) comprises a first Radio Access Technology (RAT) transceiver 354 and a second RAT transceiver 358. As shown in Figure 3, and described in greater detail herein, the RAT transceivers '1' 354 and '2' 358 are in turn coupled to a multi- RAT communications subsystem 350 by an Inter-RAT Supervisory Layer Module 352. In turn, the multi- RAT communications subsystem 350 is operably coupled to the Bus 318. Optionally, the respective radio protocol layers of the first Radio Access Technology (RAT) transceiver 354 and the second RAT transceiver 358 are operably coupled to one another through an Inter-RAT eXchange Function (IRXF) Module 356.

In various embodiments, the network node (e.g. 224) acting as a server comprises a first communication link corresponding to data to/from the first RAT and a second communication link corresponding to data to/from the second RAT.

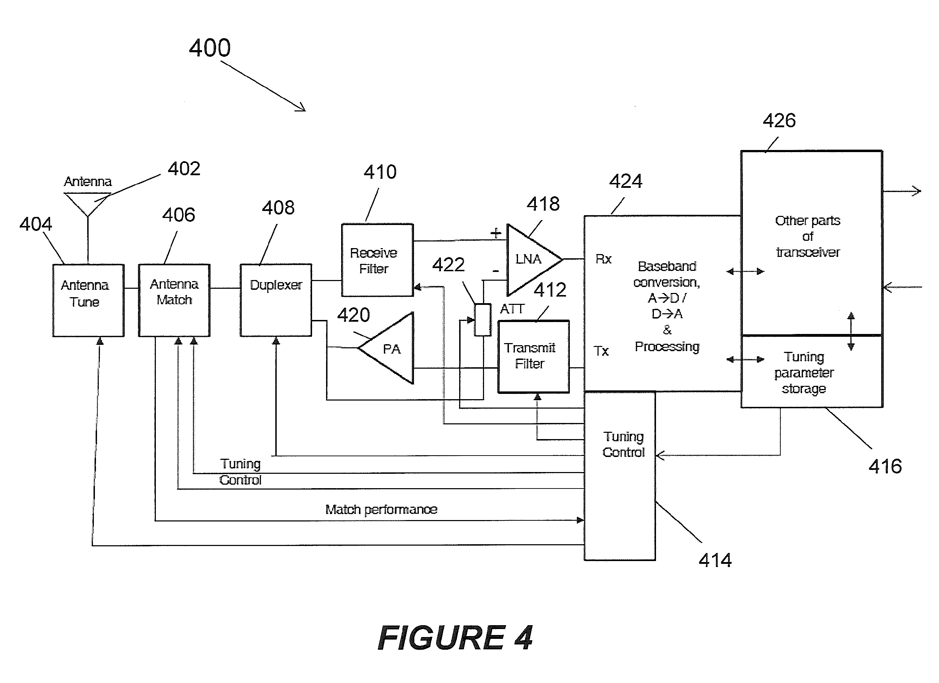

Turning now to Figure 4, an exemplary block diagram 400 in accordance with one or more embodiments is shown. In some embodiments, the block diagram 400 may be associated with a transceiver (e.g., transceiver 308 of Figure 3) and/or an antenna (e.g., antenna and front end 306 of Figure 3). In some embodiments, the block diagram 400 may be associated with a (cognitive) RF front end system.

The block diagram 400 encompasses a number of components, which may be interconnected or coupled to one another as shown in Figure 4. For example, the components may include an antenna 402, an antenna tuner 404, an antenna match circuit 406, a duplexer 408, a receive filter 410, a transmit filter 412, a tuning control apparatus 414, a tuning parameter storage apparatus 416, a low noise amplifier (LNA) 418, a transmitting power amplifier (PA) 420, and a ATT or transmitter-receiver coupling apparatus (TRCA) 422. The aforementioned components may be coupled to a processing apparatus 424 (e.g., a baseband conversion and processing apparatus) and other parts 426 that may be of any conventional type. Such other parts 426 may include power supplies, on/off switches and interfaces (e.g., user interfaces) of any type. In some embodiments, more than one front end or transceiver may be used. For example, multiple radio interfaces may be used, where the radio interfaces may include one or more of the components illustrated in connection with the block diagram 400. The radio interfaces may be connected or coupled to one another.

In Figure 4, lines that terminate with an arrowhead may be indicative of control or feedback, while lines without a terminating arrowhead may be indicative of a signal, information, or data.

The antenna 402 may couple the radio transmission medium to and from the cognitive RF front end. The antenna 402 may be tuned, potentially via the tuner 404, to suit a frequency channel being used. The antenna match apparatus 406 may couple the antenna 402 to the duplexer 408. As the antenna 402 may be required to operate over a substantial bandwidth, a matching circuit may be used to ensure efficient coupling (e.g., impedance matching) of the signals to and from the duplexer 408 and the rest of the transceiver apparatus.

The antenna 402, the antenna tuner 404, and/or the antenna match 406 functionality may be adjustable (e.g., tunable) by control signals from the tuning control apparatus 414. As the antenna 402 and/or antenna tuner 404 may be tuned to accommodate separate receive and transmit frequencies (as used for, e.g., frequency division duplex operation), the tuning control apparatus 414 may provide two control signals, one for each frequency. As the antenna 402 and its required matching 406 may change depending on the environment in which the block diagram 400 is used, for example due the hands of a user, a performance sampling signal may be provided from the antenna match apparatus 406 to the tuning control apparatus 414 to enable the matching to be dynamically adjusted to suit the operating conditions of the antenna 402. With this arrangement the antenna match 406 may be adjusted dynamically under the control of the tuning control apparatus 414 to be tailored to the radio frequencies being used for the transmission and reception. The antenna 402 may be dynamically matched to the frequency channel being used by the device. For example, if the device is using a single 5 MHz channel in the 700 MHz band, the antenna might only be tuned and matched for that 5 MHz channel and not for the whole 700 MHz band (which may extend from 698-806 MHz). This may be preferable to previous RF front end arrangements in which an antenna must be broadly tuned to the whole band of operation of the radio system and such a broad tuning may have considerable gain variation over the whole bandwidth. By dynamically matching the antenna 402 to only the desired operating channel, the best gain may be achieved and the antenna 402 may act as an additional filter to help suppress in the receiver 410 and 418 the noise and interference from signals that may be occupying other parts of the band.

The duplexer 408 may separate transmit and receive signals and couple them to the PA 420 and the LNA 418, respectively. In some embodiments, the LNA 418 and the PA 420 may include receive and transmit filters in their coupling, each of which may be tunable and coupled to the tuning control apparatus 414.

In some embodiments, the duplexer 408 may be dynamically matched to only a desired channel, thereby acting as an additional filter to help suppress noise and interference from signals in other parts of the band. Thus, the size of a duplex gap may become of less importance in the duplexer 408's filter design as the transmit and receive bands may be separated by the duplex spacing (which may be much larger than the gap). For example, in the APT band plan for the 700 MHz band (e.g., 3GPP E-UTRA band 28) the duplex gap might only be 10 MHz while the duplex separation between operating channels may be 55 MHz. By tuning the duplexer 408's filters for the operating channel, isolation between the two sides of the duplexer 408 may be improved by the filter roll-off over 55 MHz rather than just 10 MHz.

In some embodiments, the tuning control apparatus 414 may adjust tuning controls for the various RF front end components or elements. The tuning may be performed using parameters stored in the tuning parameter storage apparatus 416. The tuning parameters may be selected dynamically based on the channel that the device is currently operating on. Thus the tuning parameter storage 416 may, for example, include a set of tuning parameters for each of the RF channels that a transceiver uses in its operation. The parameters to be used may be selected from the storage apparatus 416 by a part of the process that otherwise commands the transceiver to select its operating channel and radio access technology formats. In some embodiments, as outlined further below herein, some of the tuning control parameters may be further adjusted from their stored values by dynamic measurements of the performance of the RF front end.

In some embodiments, the receive filter 410 and the LNA 418 may couple the received signal from the duplexer 408 to an input (e.g., a receive or RX input) of the baseband conversion and processing apparatus 424. Amplification may be provided by the filter 410 and/or the LNA 418 to boost the received signal before it is processed by the baseband apparatus 424, thereby assuring an adequate signal to noise ratio (e.g., a signal to noise ratio greater than a threshold). The LNA 418 may contain a gain control (not shown) that may be used to adjust the received signal to a suitable level for the Rx conversion and processing apparatus 424.

In some embodiments, the PA 420 and the transmit filter 412 may couple the signal to be transmitted from an output (e.g., a transmit or Tx output) of the baseband conversion and processing apparatus 424 to an input of the duplexer 408. The filter 412 may be used, for example, to reject spurious mixing products from a baseband upconversion. The PA 420 may amplify a signal to be transmitted to a suitable level to be strong enough to reach a receiver (e.g., a receiver in the network base station). In some embodiments, the amplification performed by the PA 420 may be a function of the distance the client node is away from one or more of the components (e.g., wireless network antenna 208 214) shown in the block diagram 200, particularly if such information is known. The PA 420 may include, for example, a gain control (not shown) to suitably adjust the output power level of a transmitted signal.

In some embodiments, the PA 420 and transmit filter 412 may be coupled to an input (e.g., the cancelling (-) input) of the LNA 418 through the TRCA apparatus 422. Such coupling may enable a portion of the transmitted signal to be subtracted (e.g., directly subtracted) from the received signal and thereby improve the suppression of the device's transmitted signal that interferes with the receive signal. Thus, the receiver may be able to operate with an improved signal to noise ratio and thereby improve its range of operation. The coupling may also reduce the requirement of the duplex filter to suppress the transmitted signal and so permit the duplexer 408's specifications to be relaxed and thus reduce its undesirable insertion loss. This coupling may provide additional transmitter/receiver isolation for one or more channels of operation for the full band to be used by the radio system and thus reduces reliance on the duplexer 408 for transmit-receive isolation. Accordingly, fabrication or manufacturing costs may be reduced as component tolerances may be relaxed. Stated in a slightly different way, the same level of performance may be obtained relative to prior solutions using less expensive components.

In some embodiments, an RF front end may be optimized (e.g., dynamically optimized) for one or more of the individual channels that are being used. It is not required, for example, that the antenna 402, matching 406, duplexer 408 or filters (e.g., filters 410 and 412) by themselves be broadly tuned for the whole service band of operation. Each may be tuned during operation as needed for the specific channel bandwidth in use and thereby the RF front end might only be operated at bandwidths needed for the operating channel. For operation with a GSM network, for example, the front end bandwidth might be 200 KHz instead of the 50 MHz of the whole band. Or, for a Long Term Evolution (LTE) network, operating in the 698-803 MHz ("700 MHz") band, the front end bandwidth may be configured for a 5 MHz channel instead of the 100 MHz of the whole service band.

In some embodiments, a narrow band, channel based, tuning arrangement may reduce the challenges of component design (e.g., RF component design). Such an arrangement may be used to suppress any signals that may be in adjacent channels, thereby improving transceiver performance. This may be of particular importance when operating in shared spectrum where the adjacent channels in some areas may be utilized by other radio systems operating with different power levels and band plans. It may be important that these non-conforming signals be filtered out early in the signal processing so they do not affect the further signal processing in the transceiver. An embodiment using the antenna 402 and the duplexer 408, for example, to act as filters to suppress out-of-channel signals may contribute to reduced intermodulation products in the receiver and thereby enable improved operation to reject undesired strong adjacent channel signals. The use of channel filters tuned for the specific channel of operation may help suppress out-of-channel signals from the transmitter and their subsequent intermodulation products due to non-linearities in the transmitter amplifiers (e.g., PA 420) and may also reduce sensitivity to non-linearity in receiver components. Together these may improve the range of performance for the transceiver and lessen its effects on other nearby transceivers operating on adjacent channels.

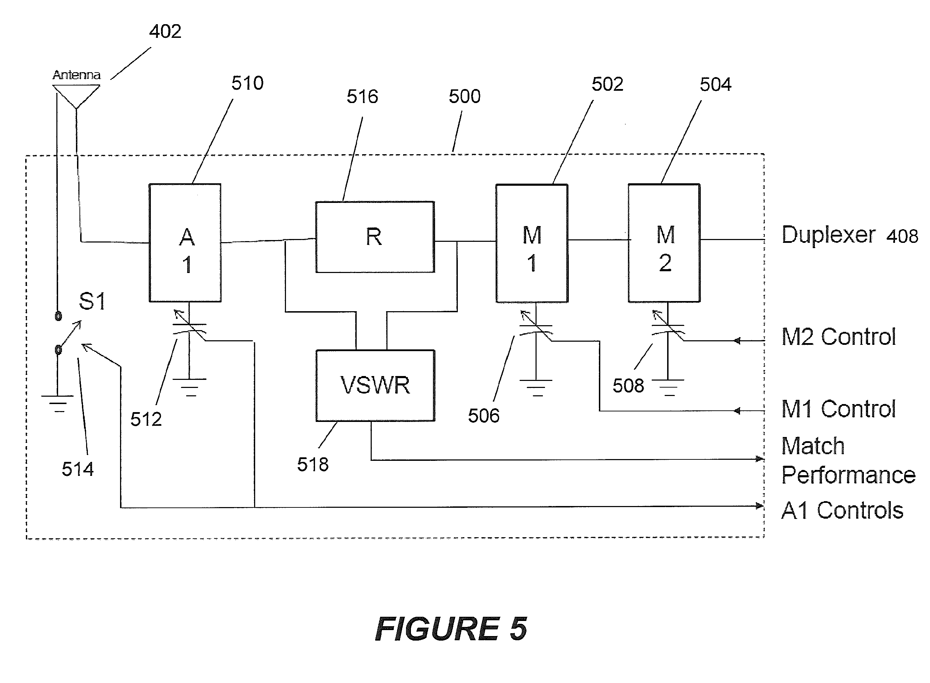

An exemplary antenna tuning - matching apparatus 500 is illustrated in Figure 5. In some embodiments, the apparatus 500 may correspond to the antenna tuning apparatus 404 and/or the antenna matching apparatus 406 of Figure 4. In the embodiment of Figure 5, the apparatus 500 may include two matching elements, M1 502 and M2 504. Matching elements M1 502 and M2 504 may be configured to accommodate the transmit and receive center frequencies and associated channel bandwidth. In the event that the RF front end is to be used for TDD operation, one matching circuit or element 502 and 504 may be disconnected through one or more switches (not shown). The matching elements 502 and 504 may include a network of frequency selective components (inductors and capacitors) that may be tuned to match the antenna 402 (or a port associated with the antenna 402) to the duplexer 408 (or a port associated with the duplexer 408).

In the embodiment shown in Figure 5, control signals may be provided to the matching elements M1 502 and M2 504 from the tuning control apparatus 414, and may be used to adjust capacitors 506 and 508 that are part of one or more matching networks. The capacitors 506 and 508 may be voltage adjustable capacitors. The capacitors 506 and 508 may have values set by a voltage provided by the tuning apparatus 414. There are many possible equivalent or alternative arrangements of matching networks and possible tuning arrangements. With this arrangement of two (or more) matching networks, an antenna coupling may be resonant (matched) at two frequencies (e.g., for the transmit channel and the receive channel). The matching networks may be adjusted to work with the channels that are being used, and need not be broadly matched to the whole band of possible operation. This arrangement has the advantage that the antenna 402 and/or the apparatus 500 acts as a filter to suppress the reception or emission of radio signals that are not associated with the desired channel of operation. The dynamically matched antenna 402 also has the advantage of providing a high level of performance for each channel across the whole band of interest.

The embodiment of Figure 5 shows, for convenience of illustration, a matching of transmit and receive frequencies as two component groups in series. There are many possible configurations. For example, in some embodiments the apparatus 500 may be a part of or coupled to transmit and receive paths of the duplexer 408.

In some embodiments, the antenna 402 may be tuned to the operating frequency channel. Tuning of the antenna 402 may be used for low frequency bands (e.g., the 700 MHz and the ultra-high frequency (UHF) band), where the antenna 402 may be smaller than a wavelength and hence have a different optimum tuning for each individual channel. In the embodiment shown in Figure 5, tuning of the antenna 402 to match the channel of operation may be performed via A1 510 with a capacitive tuning element or component 512 that may be adjusted by the apparatus 500 as well as additional antenna elements that may be switched in or out by the switch S1 514 to adjust the antenna structure to suit the channel frequency. The apparatus 500 may include many alternate configurations of reactive components, switches and tuning elements to accomplish the tuning.

In some embodiments, the apparatus 500 may include elements, components, or networks tuned by adjustable capacitors (e.g., capacitors 506, 508, 512). In some embodiments, such tuning may be achieved using a variation of electric and magnetic parameters of materials in components or a combinatorial switching of static reactive components to sum to a desired value. In the embodiment shown in Figure 5, separate notional tuning elements are shown. There are many possible combinations of these elements including some in which antenna tuning and matching functionality is combined in common or shared elements or combined with other tuning functionality such as that of the duplexer 408.

In some embodiments, such as embodiments used in connection with an FDD system, the tuning of the M1 502 and M2 504 networks may be separated by a constant frequency, as many radio systems may have a constant frequency offset between the transmit and receive channels ("duplex spacing"). However, in some embodiments, the transmit/receive offset may vary depending on the individual channel or band. Embodiments may enable the antenna 402 and/or the apparatus 500 (and potentially other aspects of the RF front end) to be adjusted to operate efficiently for various radio access technology formats in which the duplex spacing is not the same for all channels. An RF front end apparatus may accommodate variable duplex offsets that are not possible with conventional designs.

In some embodiments, tuning parameters used to adjust a matching are provided by values in the tuning parameter storage 416. The values may be installed as part of a test and calibration phase during manufacture. In the manufacturing process, test signals of known frequency may be coupled to the antenna 402 and the tuning calibration mode may adjust the tuning controls to achieve a particular result (e.g., the best match). Once the particular result for a given channel/frequency is obtained, the parameters used to obtain that result may be stored in the tuning parameter storage 416 for use during normal operation. This calibration process using known reference signals may be performed with both transmitter and received signals and to adjust one or more of the elements of the cognitive RF front end. Such a calibration technique may be used to adapt for manufacturing variations and provide the best performance for each device.

In some embodiments, the apparatus 500 may initially adjust an antenna match based on parameters loaded as part of test and calibration of a device at, e.g., the factory. However, the antenna matching may be affected by one or more conditions or inputs, such as the proximity of the user's hands to the device. In some embodiments, one or more of the elements may be adjusted (e.g., dynamically adjusted) based on the operating conditions. This may be accomplished by including a sensing element R 516 to measure the coupling of the transceiver to the antenna 402 and adjusting one or more matching elements to obtain a desired result (e.g., the best performance).

Best performance of the antenna 402, and hence the best match, may be obtained when all of the power is radiated by the antenna 402 and none of the power is reflected back towards the transmitter. This may be, for example, measured as the voltage standing wave ratio (VSWR) 518, by sampling the signal (e.g., signal voltage) on each side of a sensor, such as a known impedance. In some embodiments, the sensor may correspond to R 516, and a voltage difference may be determined between voltages measured at both sides of R 516. Any difference in voltage that exceeds an expected change from the known characteristic loss of R 516 may represent the amount of mismatch. An adjustment may be made by measuring the VSWR 518 and adjusting a tuning to minimize the difference from the expected change/value.

A matching adjustment using the VSWR 518 may be associated with measurements taken at a transmit frequency. In the case of an FDD application, matching for the receiver may use a constant offset in parameters to tune for a frequency associated with a receiver. This offset may be determined during manufacture, by testing firstly with the antenna 402 in free space, and secondly with hands around the antenna 402, and determining the offset in optimal matching parameters between the transmit and receive frequencies. The offset between transmit and receive tuning may be stored in the tuning parameter storage 416 as part of the calibration process. Thus, measuring, for example, the VSWR 518 of the transmitted signal may also be used to adjust the receive circuitry using the offset stored parameters.

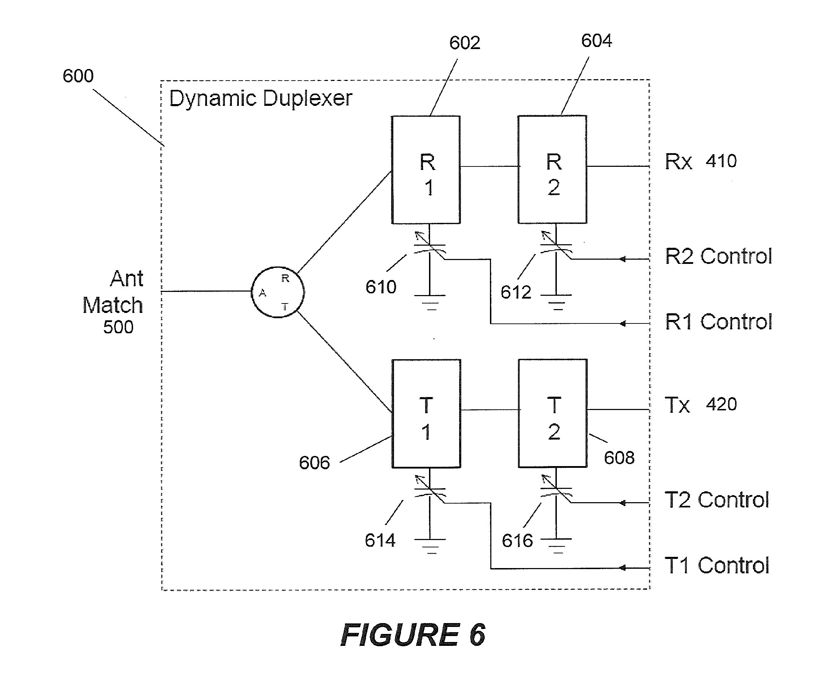

An exemplary tunable duplexer filter apparatus 600 in accordance with one or more embodiments is illustrated in Figure 6. In some embodiments, depending on the band of operation, filters may be coupled via a multi-port network (e.g., a circulator) that may help to reduce the transmitter's signal at the receiver port. In some embodiments, the duplexer 600 may correspond to the duplexer 408 of Figure 4.

The duplexer 600 may interconnect or couple the antenna matching [Ant Match] apparatus 500 with the receiver filter [Rx] 410 and the PA [Tx] 420. The duplexer 600 may receive one or more control signals from the tuning control apparatus 414. In Figure 6, the control signals are indicated as R1/R2 for controlling a receive filter in the duplexer 600 and the T1/T2 for controlling a transmit filter in the duplexer 600.

There are many possible filter network configurations that may be used in connection with, e.g., the duplexer 600. In the embodiment illustrated in Figure 6, each branch comprises two networks (e.g., R1 602 and R2 604 for the receiver, and T1 606 and T2 608 for the transmitter) that are notionally tuned by adjustable capacitors (e.g., capacitors 610 and 612 for R1 602 and R2 604, respectively, and capacitors 614 and 616 for T1 606 and T2 608, respectively). In some embodiments, tuning may be achieved by varying electric and magnetic parameters of materials in components or the combinatorial switching of static reactive components to effect a desired value.

The receive filters R1 602 and R2 604 may be tuned by the adjustable components 610 and 612, respectively, to the frequency and bandwidth of the desired receive channel(s) for the current operation of the transceiver. The transmit filters T1 606 and T2 608 may be tuned by the adjustable components 614 and 616, respectively, to the frequency and bandwidth of the desired transmit channel(s) for the current operation of the transceiver. As described above, the receive and transmit channels may be separated by a constant frequency (a "duplex separation"). The channels may be tuned independently if, for example, the band plan of operation does not have a constant separation of the transmit and receive frequencies. Tuning to a channel bandwidth of the selected operating channel may provide a roll-off between the two filters to the full extent of the duplex separation and not just the duplex gap as may be provided in conventional transceivers. Independent tuning of receive (Rx) and transmit (Tx) may accommodate band plan configurations in which the transmit frequency is higher than the receive frequency in some parts of a band arrangement and lower in at least one other part, such as in the USA 700 MHz band plan.

In some embodiments, the duplexer 600 may receive control signals from the tuning control apparatus 414. The tuning control apparatus 414 may use values stored in the tuning parameter storage 416 to set the tuning control for each channel of operation. The tuning control parameters may be stored in the tuning parameter storage 416 during manufacture or assembly as part of a test and calibration procedure. Calibration signals may be applied during manufacture and test and the control signals may be adjusted by the transceiver in calibrate mode to yield a particular result, such as the best isolation between transmit and receive components or sections. The parameters providing that result may then be stored in the tuning parameter storage 416. In some aspects of the calibration process, the transmitter may be used to provide the test signals for calibration and parameter determination.

The embodiments of Figure 4 and Figure 6 show band-pass filters (e.g., R1 602, R2 604, T1 606 and T2 608, and their associated capacitors 610, 612, 614, and 616) of the duplexer 408/600 coupled to the LNA 418 (via the receive filter 410) and the PA 420. In some embodiments, one or more portions of the receive filter 410, the LNA 418, the transmit filter 412, and/or the PA 420 may be combined as part of the duplexer 408/600's filters, or they may be separate additional elements. Any of these components or filters may be tuned for a particular channel of operation. In some embodiments, tuning elements may be included as a part of amplifier circuitry. By including tuning circuits within an amplifier, the amplifier's response may be sensitive to frequency, as the amplifier may have its designed gain only at the desired channel and thus will suppress undesired signals that are out-of-channel. This technique may improve the noise sensitivity of the receiver and eliminate or reduce the spurious emissions of the transmitter. These tuning elements may be tuned via the tuning control apparatus 414 using parameters from the tuning parameter storage 416. These parameters may be established during the test and manufacture stage in which the front end may be introduced to known signals or designated to generate known signals and the tuning parameters may be adjusted to provide a particular result (e.g., the best signal in terms of amplitude and distortion). The parameters associated with that result may be stored in the tuning parameter storage 416.

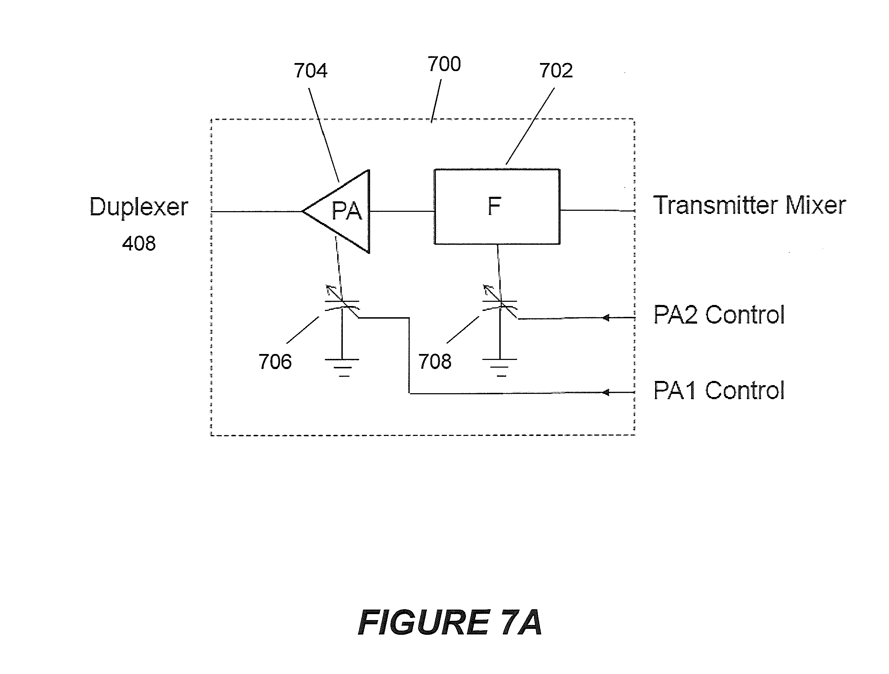

An exemplary embodiment of a tunable PA 700 is shown in Figure 7A. In some embodiments, the PA 700 may correspond to the PA 420 of Figure 4.

In the embodiment of Figure 7A, the tunable elements may correspond to a combination of a tunable filter 702 coupled to a tunable amplifier 704. The filter 702 and the amplifier 704 may be controlled by signals from PA control aspects of the tuning control apparatus 414.

In the embodiment of Figure 7A, the PA1 and PA2 control signals from the tuning control apparatus 414 are shown notionally as adjusting capacitors 706 and 708 that are part of a filter network. The capacitors 706 and 708 may adjust the bandwidth of the amplifier 704 and the filter 702, respectively. The capacitors 706 and 708 may be voltage adjustable capacitors. The values of the capacitors 706 and 708 may be set by a voltage provided by the tuning control apparatus 414. There are many possible equivalent and alternative arrangements for the components or elements. For example, the PA 700 may act to switch in or out selectable tuning components (e.g., reactive elements, SAW filters, inductors or capacitors) to achieve the tuning effects or make use of magnetic or electrostatic effects to achieve a tunable element for the circuit. In some embodiments, channel specific tuning of the amplifier 704 and the filter 702 circuits may be used to minimize the noise and distortion signals introduced by the PA 700 in the receive or transmit path.

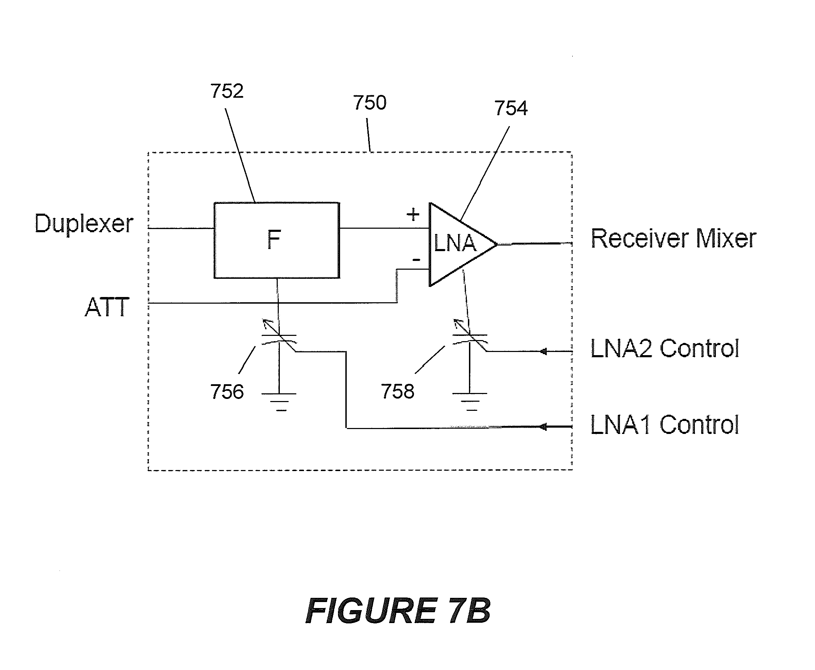

An exemplary embodiment of a tunable LNA 750 is shown in Figure 7B. In some embodiments, the LNA 750 may correspond to the LNA 418 of Figure 4.

In the embodiment of Figure 7B, the tunable elements may correspond to a combination of a tunable filter 752 coupled to a tunable amplifier 754. The filter 752 and the amplifier 754 may be controlled by signals from LNA control aspects of the tuning control apparatus 414.

In the embodiment of Figure 7B, the LNA1 and LNA2 control signals from the tuning control apparatus 414 are shown notionally as adjusting capacitors 756 and 758 that are part of a filter network. The capacitors 756 and 758 may adjust the bandwidth of the filter 752 and the amplifier 754, respectively. The capacitors 756 and 758 may be voltage adjustable capacitors. The values of the capacitors 756 and 758 may be set by a voltage provided by the tuning control apparatus 414. There are many possible equivalent and alternative arrangements for the components or elements. For example, the LNA 750 may act to switch in or out selectable tuning components (e.g., reactive elements, SAW filters, inductors or capacitors) to achieve the tuning effects or make use of magnetic or electrostatic effects to achieve a tunable element for the circuit. In some embodiments, channel specific tuning of the amplifier 754 and the filter 752 circuits may be used to minimize the noise and distortion of the signals introduced by the LNA 750 in the receive or transmit path.

The LNA 418 is shown in Figure 4 as being coupled to the output of the PA 420 via the TRCA 422. This coupling may provide or feed a small amount of the transmitted signal into the LNA 418 where it is subtracted from the received signals. This may serve to cancel or reduce any residual transmitted signal that may have leaked past filters of the duplexer 408, thereby reducing the transmitter's interference seen in the receiver. The TRCA 422 coupling may be implemented in any number of ways. In Figure 4, the TRCA 422 coupling is illustrated as a subtraction that is part of a differential amplifier circuit of the LNA 418. It may equally be accomplished using, for example, a reverse phase winding on a transformer such that the signal provided by the TRCA 422 is subtracted from the signal in the receive path.

The TRCA 422 may include an attenuator to set a coupling loss at a level needed to cancel any residual transmitter signal in the receive path. This coupling loss may be set by the tuning control apparatus 414 from parameters stored during manufacturing test and calibration of the device in the tuning parameter storage 416.

In some embodiments, the TRCA 422 may be configured to add to the coupled signal a further delayed (and potentially attenuated) version of the transmitter's signal. This additional signal may serve to cancel in the receiver the effects of the transmitter's signal that have been radiated by the antenna 402 and reflected back into the antenna 402 by objects in the environment and thus may pass through to the LNA 418. Such reflected signals may also occur due to improper matching of the antenna 402 to the transceiver. In some situations, for example, the user's hands may affect the antenna matching 406 and change the coupling of the transmitted signal via the duplexer 408 to the LNA 418. In some embodiments, the LNA 418 may include several stages, and the cancelling signal from the TRCA 422 may be coupled at one of the stages if it is not convenient for the first stage to be arranged as, e.g., a differential amplifier or to be transformer coupled.

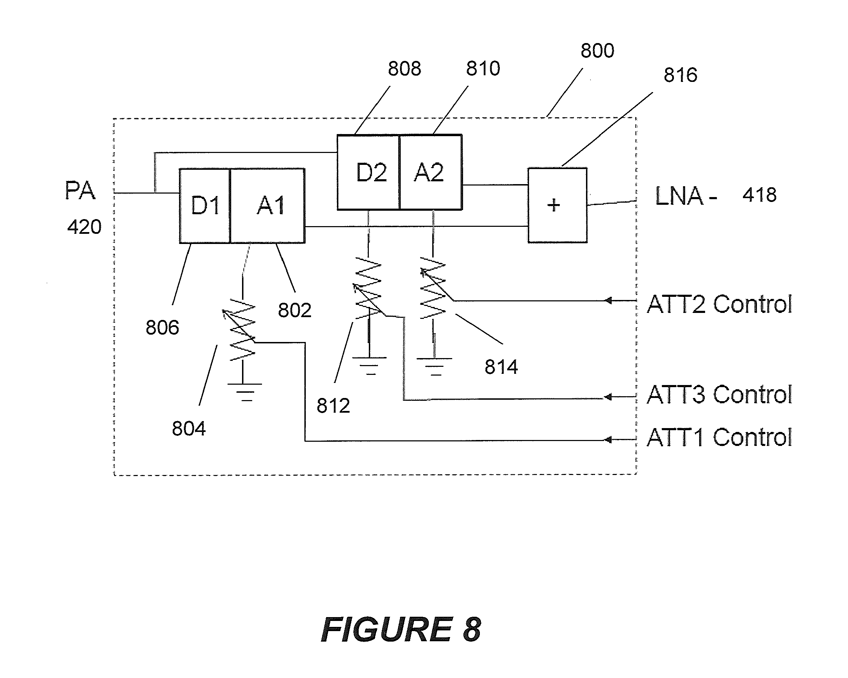

An exemplary embodiment of a TRCA 800 is shown in Figure 8. In some embodiments, the TRCA 800 may correspond to the TRCA 422.

As shown in Figure 8, a signal from the PA 420 may be attenuated by an element A1802 under the control of tuning control apparatus 414 through ATT1, by way of one or more variable components or elements, such as a variable resistor 804. A tuning or setting may control the amount of the (direct) transmitter signal provided by the PA 420 that is to be subtracted at the LNA 418. In some embodiments, the A1 802 element may include, be coupled to, or be associated with a small fixed delay D1 804 that may be equivalent to the delay the leaked transmitter signal experiences in passing through one or more of the antenna tuner 404, the antenna match 406, the duplexer 408 and receive filter 410 to reach the input (e.g., the '+' input) of the LNA 418. In some embodiments, the element A1802 may be similar to one or more elements included in the duplexer 408. In this way, the signal from the transmitter to be subtracted may be shaped in frequency and time delay equivalently to that which has leaked through the duplexer 408.

The signal from the PA 420 may also be further delayed and attenuated by the elements D2 808 and A2 810, respectively. The delay D2 808 may set by control signal ATT3 from the tuning control apparatus 414, which may be used to tune or control one or more elements or components, such as a variable resistor 812. The attenuation A2 810 may be set by the control signal ATT2 from the tuning control apparatus 414, which may be used to tune or control one or more elements or components, such as a variable resistor 814. The attenuation A2 810 and delay D2 808 may be achieved via one or more dynamic attenuation or delay elements. The signal output by the A1 802/D1 806 elements and the signal output by the A2 810/D2 808 elements may be combined (e.g., added together) at combination element 816 to generate a composite signal that may be provided to an input (e.g., the '-' input) of the LNA 418.

In some embodiments, the settings for the TRCA 422/800 may be set by the tuning control apparatus 414 using parameters in the tuning parameter storage 416 that may be set by calibration during manufacture and testing. During a calibration mode, the transmitter may be operated in each channel and the amount of undesired signal detected at the output of the LNA 418 may be reduced or minimized by adjusting the TRCA control signals and the control signal values stored in the tuning parameter storage 416 for use during operations. In some embodiments, there may be a cancellation of the transmitted signal in the receiver to enable the transmitter and receiver frequencies to be closer together (e.g., to utilize a smaller "duplex gap") than would be possible with a conventional transceiver.

In some embodiments, the signal from the TRCA 422/800 to be subtracted in the LNA 418 may be very small. The signal may include components that are within the receive frequency channel as well as components within the transmit frequency channel. The filters and the duplexers (e.g., Figures 6 and 7A-7B) may attenuate the undesired signals by, e.g., 40 or 50 dB between the transmitter and receiver. A comparable level of attenuation may be introduced by the TRCA 422/800 in preparing the signal to be provided by the TRCA 422/800 to the LNA 418. In some embodiments, the TRCA 422/800 may be configured to provide a signal to the LNA 418 such that the LNA 418 subtracts "a bit too little" rather than "too much" from the received signal, as subtracting an excess may unnecessarily distort the desired receive signal. In other words, in some embodiments the receiver may be able to tolerate a portion of the transmitter signal being present in the received signal in an amount that is less than a threshold.

In some embodiments, an amount of undesired transmit signal in the receive path may fluctuate due to changes in the antenna matching (e.g., antenna matching 406) and from proximity of a device to external effects, such as the hands holding the device. In some embodiments, attenuation and/or delays in the TRCA 422/800 may be adjusted (e.g., dynamically adjusted) to changes in the operating conditions.

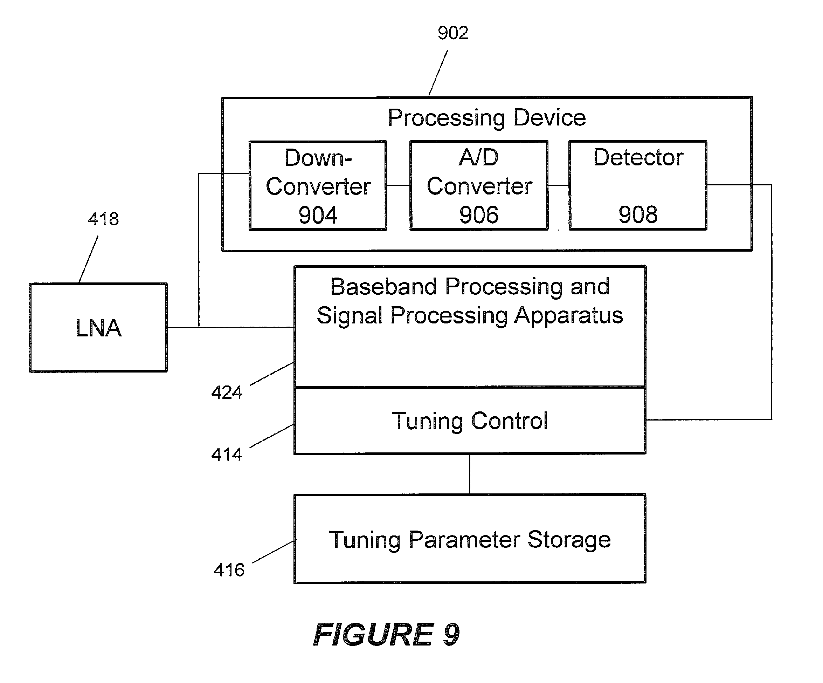

For dynamic adjustment of the TRCA 422/800's tuning parameters, signal processing may be performed on the output of the LNA 418. Such processing may detect the presence of the (undesired) transmitted signal and adjust the tuning parameters from their calibration values to compensate for current conditions. The detection of the transmitted signal may be performed, for example by detecting pilot signals that may be characteristic of the transmitter's signal format. In some embodiments, a synchronizing/training burst included in the transmitted signal that may be used to aid the intended receiver in its detection may be used by a transmit signal detector associated with the processing. In some embodiments, the processing may be performed by the baseband processing and signal processing apparatus 424 that may be part of the receiver. Alternatively, some or all of the processing for detecting the presence of the transmitted signal in the receiver may be performed by an additional processing device 902, as described further below in connection with Figure 9.

Figure 9 shows the output of the LNA 418 coupled to the processing device 902, and the processing device 902 coupled to the tuning control apparatus 414. The processing device 902 may include a down-converter 904 for downconverting the frequency of the signal (e.g., the transmit signal) received from the LNA 418, a converter 906 for converting from an analogue to digital format, and a detector 908 configured to detect, e.g., pilot tones of the transmitted signal. The detection results generated by the detector 908 may be provided to the tuning control apparatus 414 for processing to optimize parameters that may be used to suppress the transmitted signal that may be present in the receiver signal. The optimized parameters may be stored in the tuning parameter storage 416, potentially overwriting pre-existing values for those same parameters.

In the embodiment of Figure 9, the processing device 902 is shown as a separate entity. In some embodiments, the processing device 902 may be included as part of a receiver section of a transceiver [424].

The embodiment shown in Figure 4 illustrates a single transmitter element (e.g., the baseband processing and signal processing apparatus 424, the transmit filter 412, and the PA 420) coupled through the TRCA 422 to the LNA 418. In some embodiments, a transceiver may include multiple transmitters utilized simultaneously to aggregate multiple channels. In such a transceiver, the TRCA 422 may combine attenuated signals from the multiple transmitters in its combination element "+" (e.g., "+" 816 of Figure 8). The multiple transmitted signals may generate harmonics and intermodulation products as a result of non-linearities of the various circuits and their interactions. Some of these undesired products may be within, or adjacent to the desired receive bandwidth of the receiver. For example, the second harmonics of a transmitter in the 700 MHz band may overlap, or be adjacent to, the signals to be received from satellite navigation at about the 1534 MHz band. The TRCA 422 may enable these undesired products or signals to be suppressed in the receiver and thereby enable reception of GPS location information. The "+" element 816 may therefore contain a non-linear element (e.g., a diode) to create the products as part of the composite signal to be subtracted at the input (e.g., the '-' input) of the LNA 418. In this way, the various undesired products of the transmitters may be removed from the LNA 418 and thereby enable the transceiver to better receive signals in spite of undesired signals from its transmitters.

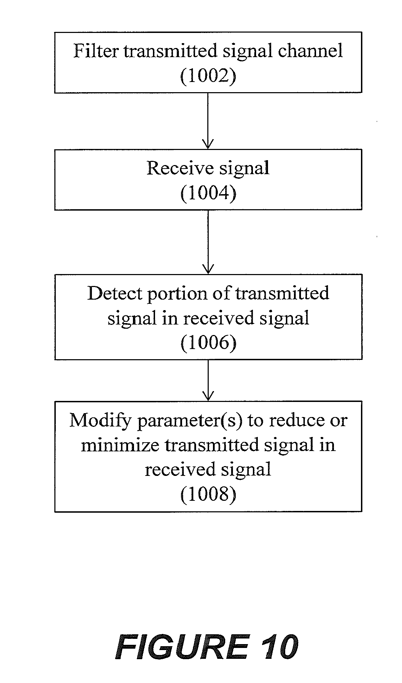

Turning now to Figure 10, a flow chart of an exemplary method for adjusting parameters is shown. The method of Figure 10 may be executed by, or in connection with, one or more systems, components, or devices, such as those described herein.

In block 1002, a transmitted signal channel may be filtered. For example, such filtering may take place in connection with the transmit filter 412 of Figure 4.

In block 1004, a signal may be received. For example, the received signal may correspond to the signal provided at the output of the LNA 418 of Figure 4.

In block 1006, a portion of the transmitted signal of block 1002 may be detected in the received signal of block 1004. For example, the baseband processing and signal processing apparatus 424 and/or the processing device 902 may be configured to detect the presence of the transmitted signal in the received signal.

In block 1008, one or more parameters associated with the tuning control apparatus 414 and/or the tuning parameter storage 416 may be modified to reduce or minimize the amount of the transmitted signal that is present in the received signal. As part of block 1008, such (modified) parameters may be provided to the TRCA 422 and/or stored in the tuning parameter storage 416.

The method of Figure 10 may be used to minimize or reduce the presence of undesired transmitter signals in the receive path. The performance of a duplexer (e.g., duplexer 408) may be improved without having to include additional filter elements and their consequent loss.

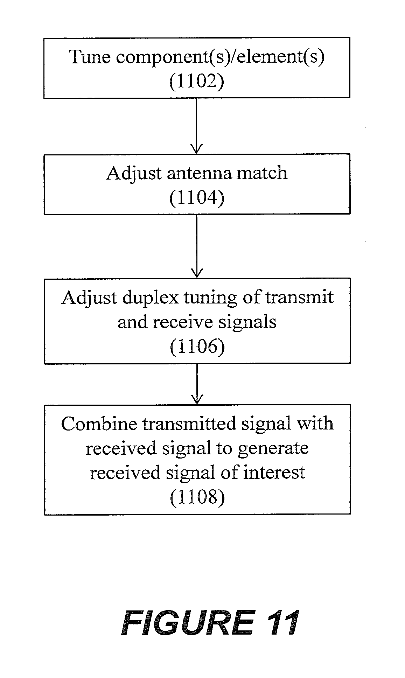

Turning to Figure 11, a flow chart of an exemplary method is shown. The method of Figure 11 may be executed by, or in connection with, one or more systems, components, or devices, such as those described herein. For example, the method of Figure 11 may be used to operate a transceiver.

In block 1102, one or more elements or components of the transceiver may be tuned. The tuning may take place dynamically, in real-time, or substantially in real-time. The tuning may take place using one or more parameters. At least one of the parameters may be measured and stored in a storage device, unit, or apparatus during a test and calibration phase based on, e.g., one or more test signals. A test signal may be generated by a transmitter associated with the transceiver.

In block 1104, an antenna match may be adjusted (e.g., dynamically adjusted) to, e.g., maximize radiated power out of an antenna. The antenna match may be controlled to maximize a coupling to the antenna and may be based on a measurement of VSWR. The adjustment may be based on a provisioning of one or more parameters.

In block 1106, a duplexer tuning of transmit and receive signals may be adjusted (e.g., dynamically adjusted). Such adjustment may take place based on individual channels of operation, thereby providing independence between the controls of the various channels, and enhancing the performance with respect to each channel.

In block 1108, an attenuated and/or delayed version of a transmitted signal may be combined with (e.g., subtracted from) a received signal to generate a received signal of interest. Execution of the block 1108 may at least partially correspond to an execution of the method of Figure 10. As part of block 1108, non-linear harmonics or intermodulation may be generated with respect to one or more signals.

The operations or blocks of the methods described herein are illustrative. In some embodiments, one or more portions of the blocks may be optional. In some embodiments, one or more additional blocks not shown may be included. In some embodiments, the blocks may execute in an order or sequence that is different from what is shown in the figures.

Through a combination of one or more elements, components, systems, and methods described herein, a cognitive radio RF front end may be configured to operate in conditions associated with a shared spectrum band by virtue of dynamic narrow band adaptation. The front end may coexist with strong undesired signals in adjacent or nearby channels as well as minimize its interference into other systems that may be operating in the same or nearby bands.

Embodiments of the disclosure may be tied to one or more particular machines. For example, in some embodiments a transceiver may be configured to match an antenna's characteristics (e.g., an antenna's impedance) to reduce or minimize losses (e.g., reflection losses). In some embodiments, the transceiver may be configured to prevent or minimize the extent to which a transmitted signal interferes with a received signal. For example, the transceiver may include one or more of a duplexer, a TRCA, a controller, and a filter. The controller may store parameters to provide one or more functions, such as tuning, attenuation, delay, ordering or sequencing, etc., with respect to one or more components or signals. At least a portion of the parameters may be obtained during a calibration mode or phase for use during a normal operating mode. The parameters may be subject to modification based on one or more inputs or conditions experienced during the normal operating mode.

As described herein, in some embodiments various functions or acts may take place at a given location and/or in connection with the operation of one or more apparatuses, systems, or devices. For example, in some embodiments, a portion of a given function or act may be performed at a first device or location, and the remainder of the function or act may be performed at one or more additional devices or locations.

Embodiments of the disclosure may be implemented using one or more technologies. In some embodiments, an apparatus or system may include one or more processors, and memory storing instructions that, when executed by the one or more processors, cause the apparatus or system to perform one or more methodological acts as described herein. Various mechanical components known to those of skill in the art may be used in some embodiments.

Embodiments of the disclosure may be implemented as one or more apparatuses, systems, and/or methods. In some embodiments, instructions may be stored on one or more computer-readable media, such as a transitory and/or non-transitory computer-readable medium. The instructions, when executed, may cause an entity (e.g., an apparatus or system) to perform one or more methodological acts as described herein. In some embodiments, the functionality described herein may be implemented in hardware, software, firmware, or any combination thereof.

The particular embodiments disclosed above are illustrative only and should not be taken as limitations upon the present disclosure, as the disclosure may be modified and practiced in different but equivalent manners apparent to those skilled in the art having the benefit of the teachings herein. Accordingly, the foregoing description is not intended to limit the disclosure to the particular form set forth, but on the contrary, is intended to cover such alternatives, modifications and equivalents as may be included within the spirit and scope of the disclosure as defined by the appended claims so that those skilled in the art should understand that they can make various changes, substitutions and alterations without departing from the spirit and scope of the disclosure in its broadest form.

## Claims

1. A method of operating a transceiver comprising:
coupling an attenuated version of a transmitter signal to a receiver amplifier to subtract interference generated by the transmitter signal from a received signal;
selecting parameters from a storage apparatus; and
applying the parameters to elements of the transceiver to tune said elements in order to operate a channel associated with the transmitter signal and the received signal.

2. The method of claim 1, further comprising:
determining at least one of the parameters during a test and calibration phase based on measurements using known test signals.

3. The method of claim 2, wherein the known test signals are generated by a transmitter associated with the transceiver.

4. The method of claim 2, further comprising:
dynamically adjusting an antenna match circuit based on the parameters to maximize a coupling to an antenna.

5. The method of claim 4, further comprising:
measuring a voltage standing wave ratio (VSWR) associated with the antenna to maximize the coupling to the antenna.

6. The method of claim 1, further comprising:
dynamically adjusting a duplex spacing for individual channels of operation, the individual channels comprising the channel.

7. The method of claim 1, further comprising:
dynamically configuring the transceiver to operate in at least one of a Time Division Duplex (TDD) and a Frequency Division Duplex (FDD) mode in the channel.

8. The method of claim 1, wherein the attenuated version of the transmitter signal coupled to the receiver amplifier further comprises a delay relative to the transmitter signal.

9. The method of claim 1, wherein the attenuated version of the transmitter signal coupled to the receiver amplifier comprises at least one of non-linear harmonics and intermodulation.

10. The method of claim 1, further comprising:
adjusting the parameters to minimize the presence of the attenuated version of the transmitter signal in an output of the receiver amplifier.

11. The method of claim 1, wherein the elements of the transceiver comprise a radio frequency (RF) antenna, an antenna match circuit, a duplexer, the receiver amplifier, a power amplifier, and at least one filter, wherein the receiver amplifier is a low noise amplifier, and wherein the power amplifier is associated with the transmitter signal.

12. A device comprising:
a circuit comprising separately tunable receive and transmit frequency bands, wherein:
the circuit is configured to minimize undesired transmitter signals in a receiver path by dynamically adjusting an input to a receiver low noise amplifier by using a transmit baseband conversion signal and a transmit output signal from a transmit power amplifier as feedback to the receiver low noise amplifier.

13. The device of claim 12, further comprising:
a storage apparatus configured to store at least one parameter for tuning at least one element of the device; and
a controller configured to cause the least one parameter to be provided to the at least one element.

14. The device of claim 13, wherein the at least one parameter is determined during a test and calibration phase when the device is manufactured based on measurements using known test signals.

15. The device of claim 12, wherein the circuit comprises:
a first element configured to accommodate center frequencies and channel bandwidth associated with the transmitter signals;
a second element configured to accommodate a center frequency and channel bandwidth associated with a receiver signal in the receiver path; and
a third element configured to match a channel of operation associated with an antenna coupled to the circuit and at least one of:
at least one of the transmitter signals, and
the receiver signal.
